# EUROPEAN PATENT APPLICATION

(11) **EP 0 596 501 A2**
(43) Date of publication of application: **11.05.1994**
(21) Application number: 93117916.2
(22) Date of filing: 04.11.1993
(51) Int. Cl.: G11B 7/09, G11B 7/00

(54) **Tracking method for an optical disk**

(30) Priority: 04.11.1992 JP 294968/92
(71) Applicant: PIONEER ELECTRONIC CORPORATION, Meguro-ku Tokyo (JP)
(72) Inventor: Higuchi, Takanobu, c/o Sougoukenkyusho, Tsurugashima, Saitama-ken (JP)
(74) Representative: Popp, Eugen, Dr.

(57) **Abstract**

An optical disc (16) has a plurality of pits representing recorded data. The pits of the optical disc (16) are irradiated with a first light beam (LD1 ) having an intensity sufficient to cause a phase change of material of the optical disc (16) so as to reproduce the data, and with a second light beam (LD₂) having a lower intensity than the first light beam so as not to occur the phase change of the material, for producing a tracking error signal.

## Description

### BACKGROUND OF THE INVENTION

The present invention relates to a tracking method for an optical disc.

There has been proposed a reproducing system which may reproduce information recorded on an optical disc at a high-density which is based on the non-linear optical effect by the laser.

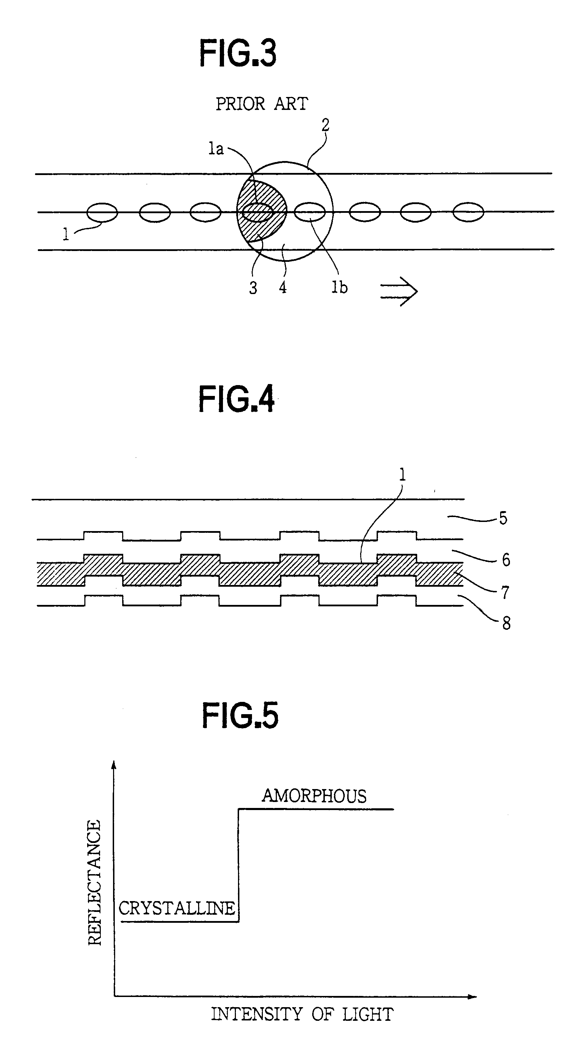

Fig. 4 shows such a high-density optical disc. The disc comprises a transparent substrate 5, a dielectric protection film 6, recording film 7 having pits 1, and a dielectric protection film 8, laminated one by one.

The recording film 7 is made of material the phase of which changes with the temperature thereof, so that the reflectance of the film changes accordingly. The recording film is in a crystalline structure at the room temperature, and becomes an amorphous structure when heated above a predetermined temperature. As shown in Fig. 5, the reflectance of the film 7 increases in the amorphous state.

In order to read the data, a spot 2 of the laser beam traces the pits 1 in the direction shown by an arrow in Fig. 3. As the spot 2 moves, the recording film 7 is heated starting from a position where a forward end of the spot is focused. Hence, a portion of the recording film 7 where the rear end of the spot 2 is applied is heated above a melting point, thereby forming an amorphous portion 3 (hatched portion). A remaining portion 4 in the spot except the amorphous portion 3 is in the crystalline structure. Since the reflectance of the crystalline portion 4 is small, a pit 1 b in the portion is not read out. Due to a large reflectance of a pit 1 a in the amorphous portion 3, data by the pit 1 a is read. Thus only The pit 1 a is read although the spot covers both of the pits 1 a and 1 b.

Namely, although the spot has a large diameter encompassing a plurality of pits, the crystalline portion 4 of the film 7 is substantially blocked from the beam. Hence, it is possible to provide pits at a high-density. Such a reproduction system is described in Japanese Patent Application Laid-Open No. 3-292632.

A track-following servo system for accurately tracing the pits generally uses a three-spot method or a push-pull method with a single spot. In the three-spot method, two additional side beams are provided besides a main beam for reproducing the recorded data. Both methods have disadvantages for the high-density disc as described hereinafter.

When the laser beam is applied on the recording film 7, the physical quality and/or the optical quality of the material changes. Consequently, the quantity of reflected light becomes irregular. Therefore, if the push-pull method is used, the operation of the tracking servo is unstable. In the three-spot method, two side beams cause the optical or physical quality of the material of the film 7 to change, or at least cause a further change of the quality of the material which has be given by the main beam. The change of the quality may cause a reading error, cross talk from the adjacent tracks, miss erasing, reduction of the intensity of the reflected light, and others.

### SUMMARY OF THE INVENTION

An object of the present invention is to provide a reproducing system for a high-density optical disc, where a stable tracking error signal and an accurate data signal are obtained.

In accordance with the present invention, a first light beam has an intensity sufficient to cause a phase change of material of an optical disc so as to record or to reproduce data on or from the optical disc. A second light beam for producing a tracking error signal has less intensity so that the phase change will not occur, thereby preventing erroneous recording and erasing, and crosstalk between the adjacent tracks. Thus, an appropriate reproduced data signal is obtained as well as a stable tracking error signal.

Other objects and features of this invention will become understood from the following description with reference to the accompanying drawings.

### BRIEF DESCRIPTION OF DRAWINGS

Fig. 1 is a block diagram of a reproducing system for a high-density optical disc according to the present invention;
Fig. 2 is an illustration showing relative positions of beam spots caused by a reproducing beam and track-following beams of the reproducing system of Fig. 1;
Fig. 3 is a diagram explaining the principle of a reproduction system for a high-density optical disc;
Fig. 4 is a section of the high-density optical disc; and
Fig. 5 is a graph showing a relationship between intensity of reflected light and reflectance of the reflected light.

### DETAILED DESCRIPTION OF THE PREFERRED EMBODIMENT

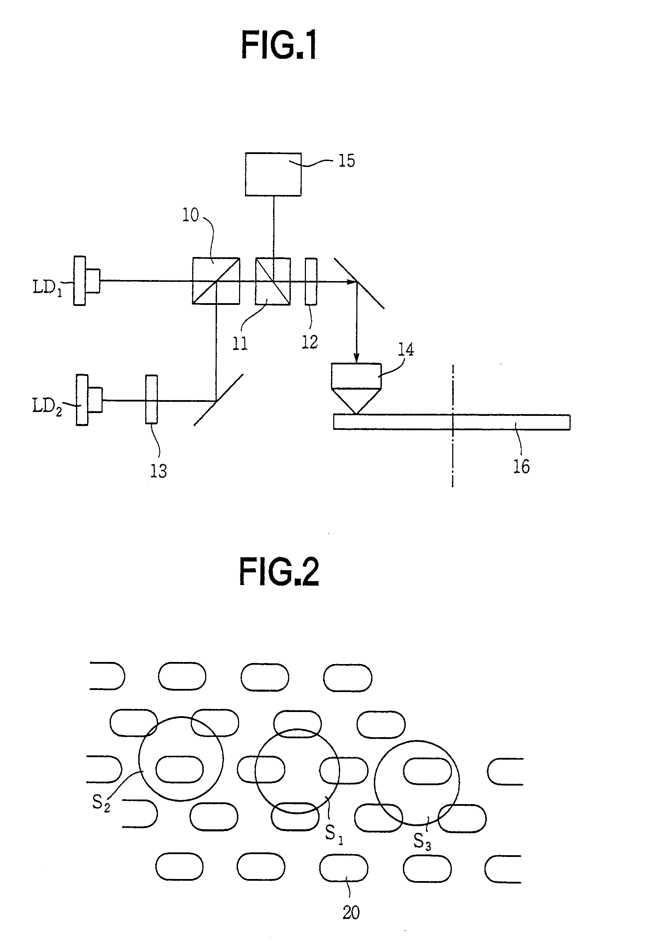

Referring to Fig. 1 an optical system of a reproducing system for reading a high-density optical disc 16 has a first laser diode LD1 and a second laser diode LD2. The high-density optical disc 16 has the same construction as that of Fig. 4. The laser diode LD1 emits a reproducing beam for producing a reproduced data signal from pits formed on the optical disc. The second laser diode LD2 emits a crack-following beam for producing a tracking error signal. In accordance with the present invention, the reproducing beam emitted from the first laser diode LD1 has an intensity high enough to render the temperature of the optical disc to rise for causing change of the phase of the recording film 7. The track-following beam has a lower intensity so as not to cause the phase change of the material or at least, not to affect the phase change caused by the reproducing beam, but has an intensity enough to light the disc for performing the tracking operation.

The track-following beam from the laser diode LD2 is split into three beams by a grating 13 and transmitted to a prism 10 to which the reproducing beam from the laser diode LD1 is also transmitted. The prism 10 integrates the reproducing beam with the center beam of the split track-following beam so that the optical axes thereof coincide with each other. The beams are then focused on tracks of the optical disc 16 through a beam splitter 11, quarter- wave plate 12 and an objective 14. The three beams reflected from the optical disc 16 are received by a photodetector 15 passing through the objective 14, and the beam splitter 11.

Fig. 2 shows the relative positions of the beam spots focused on the optical disc 16. Namely, a center spot S1 caused by the reproducing beam for reading pits 20 on the disc 16 is focused on the center of a track comprising the pits to be read out. Meanwhile side spots S2 and S3 caused by the track-following beams for obtaining the tracking error signal are slightly offset from the track to either side thereof and positioned at the front and the rear of she center spot S1 with respect to the moving direction of the spots. Thus, the tracking error signal is obtained in accordance with the conventional three-spot method.

Due to the low intensifies of the track-following beams, the beam spots S2 and S3 do not cause phase change in the optical disc 16. That is the material of the recording film 7 does not change to the amorphous. Thus, although the pit 20 which is to be read by the beam spot S1 has been irradiated with the beam spot S3, the reflected reproducing beam is not affected by the track-following beam spot S3. Thus, an accurate reproduced data signal is obtained.

An array diode mounted on a single substrate may be used as a light source for emitting the reproducing beam and the track-following beams.

The hereinbefore described embodiment of the present invention may be employed when recording data on the optical disc in accordance with the phase-change recording method. Since the phase-change recording method is based on the change of the phase of the material of the disc, there is not provided pits for tracking, but a pregroove is provided for tracking. The tracking error signal is obtained in the same manner by the pregroove without causing erroneous recording. The system of the present invention may further be adapted to a recording and reproducing system for high-density optical discs having recording materials other than the phase change materials.

From the foregoing it will be understood that the present invention provides a tracking method wherein a second light beam for producing a tracking error signal has an intensity low enough so as not to cause a phase change of the optical disc. Thus, erroneous recording and erasing, and crosstalk between the adjacent tracks are prevented.

While the presently preferred embodiment of the present invention has been shown and described, it is to be understood that this disclosure is for the purpose of illustration and that various changes and modifications may be made without departing from the scope of the invention as set forth in the appended claims.

## Claims

1. A tracking method for an optical disc having a mark means, comprising:
irradiating the optical disc with a first light beam having an intensity sufficient to cause a condition change of material of the optical disc so as to record and to reproduce data on and from the optical disc;
irradiating the mark means of the optical disc with a second light beam having a lower intensity than the first light beam so as not to occur the condition change of the material, for producing a tracking error signal.

2. The method according to claim 1 wherein:
the mark means is pits formed on the optical disc.

3. The method according to claim 1 wherein:
the mark means is a pregroove formed on the optical disc.

4. The method according to claim 1 wherein:
the condition change is phase change of the material.
